# EUROPEAN PATENT SPECIFICATION

(11) **EP 2 918 364 B1**
(45) Date of publication and mention of the grant of the patent: **17.08.2022**
(21) Application number: 15156500.9
(22) Date of filing: 25.02.2015
(51) Int. Cl.: B23K 9/028

(54) **PROCESS FOR WELDING PIPE CONNECTIONS FOR HIGH TEMPERATURE APPLICATIONS**
VERFAHREN ZUM SCHWEISSEN VON ROHRVERBINDUNGEN FÜR HOCHTEMPERATURANWENDUNGEN
PROCÉDÉ DE SOUDAGE POUR DES RACCORDS DE TUYAUX POUR APPLICATIONS À HAUTE TEMPÉRATURE

(30) Priority: 14.03.2014 EP 14159695
(43) Date of publication of application: 16.09.2015
(73) Proprietor: Ansaldo Energia IP UK Limited, London W1G 9DQ (GB)
(72) Inventor: Radis, Rene, 8003 Zürich (CH); Staubli, Markus, 5605 Dottikon (CH); Buetikofer, Roland, 5304 Endingen (CH)
(74) Representative: Bernotti, Andrea

(56) References cited:
- DE-A1- 19 527 634
- JP-A- S5 542 148
- JP-A- H08 281 430
- JP-B2- 3 085 877
- US-A- 1 313 542
- US-A- 4 525 620
- US-A1- 2009 223 053
- Thyssen Böhler ET AL: "Thermanit Nicro 82 - GMAW wire", , 30 September 2005 (2005-09-30), pages 268-269, XP055137085, Unionstr. 1, Hamm Retrieved from the Internet: URL:http://www.thermanit.com/Data/thermani tcms0607/produkte/Wire_Thermanit_Nicro82.p df [retrieved on 2014-08-28]
- KING J F ET AL: "Development of an Improved Stainless Steel to Ferritic Steel Transition Joint", WELDING JOURNAL,, vol. 56, no. 11, 1 November 1977 (1977-11-01), pages 354-s, XP001342150,
- Jounghoon Lee ET AL: "Mechanical Properties Evaluation in Inconel 82/182 Dissimilar Metal Welds", 19th International Conference on Structural Mechanics in Reactor Technology 2007 (SMiRT 19), 17 August 2007 (2007-08-17), XP055415516, ISBN: 978-1-61567-050-5 Retrieved from the Internet: URL:https://repository.lib.ncsu.edu/bitstr eam/handle/1840.20/31129/G04_4.pdf?sequenc e=1&isAllowed=y [retrieved on 2017-10-13]

## Description

### BACKGROUND OF INVENTION

The present invention is directed to a process for welding pipe connections for high temperature applications, particularly in power plants, comprising a first pipe section and a second pipe section, wherein the first pipe section is made of a ferritic material having a first coefficient of thermal expansion (CTE1) and wherein the second pipe section is made of an austenitic material having a second coefficient of thermal expansion (CTE2), which is different from the first coefficient of thermal expansion (CTE1), and wherein the weld joint is made of an austenitic filler material which has a third coefficient of thermal expansion (CTE3) which is in the range of the second coefficient of thermal expansion (CTE2). The invention is further directed to such a pipe connection.

### PRIOR ART

In high temperature applications, particularly in power plant applications it is known to use pipe connections (also called intermediate pipe pieces) with a first pipe section made of a ferritic material and a second pipe section made of an austenitic material, wherein the two sections are welded together by using an austenitic filler material. Such a pipe connection which is made from dissimilar metals is also called dissimilar metal weld (DMW). Such DMW pipe connections are usually welded with an at least partially V-shaped welding groove from the outside of the pipe.

DE 195 27 634 A1 describes a pipe connection with such an external weld. In addition it refers to a first pipe section made of ferritic material and a second pipe section made of austenitic material. For welding together both pipe sections a weld filler is used with a thermal expansion coefficient (CTE) which is similar/close to the one of the first ferritic pipe material.

When producing a dissimilar metal weld the problem occurs at the fusion line between the austenitic filler material and the pipe section made of ferritic material that due to the differences in the coefficients of thermal expansion (CTE) the second pipe section made of an austenitic material and the weld joint material (filler material) made of an austenitic material are subject to a higher degree of elongation (ε) than the first pipe section made of ferritic material.

Since the second pipe section and the weld joint filler material are usually having the same coefficient of thermal expansion (CTE) or at least a coefficient of thermal expansion (CTE) in the same range, the connection between the second pipe section and the weld joint material is usually good. However, when DMW pipe connections are subject to high temperatures, there is a big difference in the coefficients of thermal expansion (CTE) between the weld joint material and the first pipe section. This leads to additional stresses due to the differences in elongation (ε). This additional stress is added to stress caused by operating parameters such as pressure inside the pipe connection or as bending moments such that the stress at the critical fusion line is increased and the lifetime of such pipe connections is shortened. It is known that metallurgical properties at the fusion line are responsible for failure of pipe connections after short service times because a hard and brittle martensite layer is formed next to the austenitic phase and a carbon-depleted zone in the ferritic material as well as brittle precipitates at the fusion line are formed.

In order to detect an upcoming failure of a DMW in high temperature piping systems, non-destructive testing (NDT) is therefore regularly performed on such pipe connections in short intervals and the transition piece comprising a dissimilar metal weld (DMW) has to be replaced very often.

It is also known to overcome the problem of reduced lifetime due to additional stress caused by the differences in the coefficients of thermal expansion (CTE) by optimizing the metallurgical properties at the fusion line of the weld joint for example by performing post weld heat treatment (PWHT). Material combinations are known wherein a closer match of the coefficients of thermal expansion (CTE) can be achieved in order to reduce the additional stress. But these approaches are very costly and time consuming.

Other known solutions are disclosed in document KING J F ET AL: "Development of an Improved Ferritic Steel Transition Joint", WELDING JOURNAL , vol.56, no. 11, (1977-11-01), pages 354-s, and in document JPS5542148 A, on which the preamble of claims 1 and 6 is based.

It is therefore an object of the claimed invention to overcome the disadvantages of the prior art and to provide a process for welding pipe connections and a pipe connection with the goal of minimizing the stress in the area of the DMW when the pipe connection is subject to high temperatures.

### SUMMARY OF THE INVENTION

This object is achieved by providing a process for welding pipe connections for high temperature applications according to claim 1. This process comprises the steps of: axially aligning the first and second pipe sections to be connected, making an at least partially V-shaped welding groove open radially inwards, performing an inside welding process inside the first and second pipe sections to be connected. In an inside welding process pipes are welded from the inside diameter rather than from the outside diameter. When the first and second pipe sections are welded together via inside welding by using an at least partially V-shaped welding groove open radially inwards, no additional normal tensile stress is induced on the critical weld joint fusion line between the austenitic filler material and the first pipe section made of ferritic material. When the thermally induced elongation of the austenitic second pipe section and the austenitic filler material occurs, the weld joint material can be supported by the inclined surface of the at least partially V-shaped welding groove which is open radially inwards. Therefore, compressive stress is induced between the weld joint material and the first pipe section such that the lifetime and durability of the dissimilar metal weld connection can be improved.

It is preferred, that a pipe section made of ferritic C-steel is used as the first pipe section. It is particularly preferred that P91 steel or P22 steel is used as ferritic C-steel. Such steels are usually having preferred properties for high temperature applications such as applications in power plants.

Another preferred alternative of the process for welding pipe connections provides that a pipe section made from austenitic steel or from Ni-based materials is used as the second pipe section.

In another preferred alternative of the process austenitic steel or an Ni-based material is used as the austenitic filler material.

The above mentioned object is also achieved by providing a pipe connection according to claim 6. Such a pipe connection is characterized in that the welding groove is at least partially V-shaped and open radially inwards and that the first and second pipe sections are welded together via inside welding. Because the first and second pipe sections are welded together via inside welding by using an at least partially V-shaped welding groove open radially inwards, no additional normal stress is induced on the critical weld joint fusion line between the austenitic filler material and the first pipe section made of ferritic material. When the thermally induced elongation of the austenitic second pipe section and the austenitic filler material occurs, the weld joint material can be supported by the inclined surface of the at least partially V-shaped welding groove which is open radially inwards because of the inside welding process. Therefore, compressive stress is induced between the weld joint material and the first pipe section such that the lifetime and durability of the dissimilar metal weld connection can be improved by providing a pipe connection according to the invention.

Preferably the welding groove is V-shaped or Y-shaped or is having any other inclined surface of a welding groove opening radially inwards such that the weld joint material can be supported by the inclined surface in order to produce compressive stress when the pipe connection is subject to high temperatures.

In a preferred embodiment of the pipe connection, the first pipe section is made of ferritic C-steel, wherein it is particularly preferred that the ferritic C-steel is P91 steel or P22 steel which are having preferred properties for high temperature power plant applications.

It is particularly preferred that the second pipe section is made of austenitic steel or an Ni-based material.

It is further advantageous that the austenitic filler material is made of austenitic steel or an Ni-based material.

### BRIEF DESCRIPTION OF THE DRAWINGS

FIG. 1 shows a process chart with the steps of a process according to the invention;
FIG. 2 shows a pipe connection according to the state of the art;
FIG. 3 shows a pipe connection according to the invention;

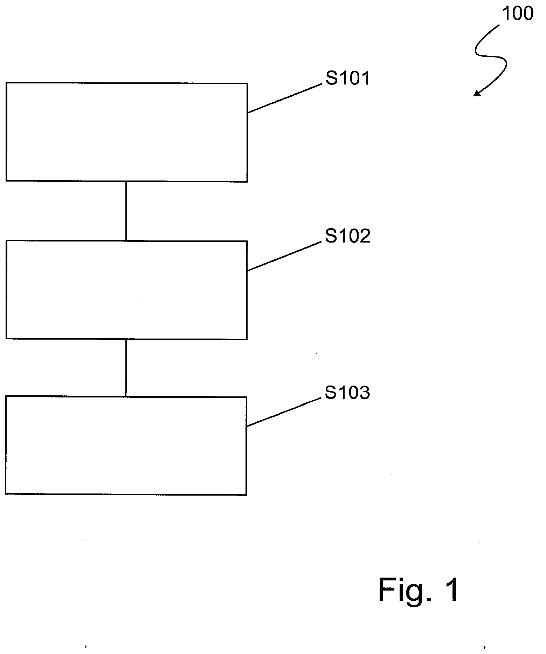

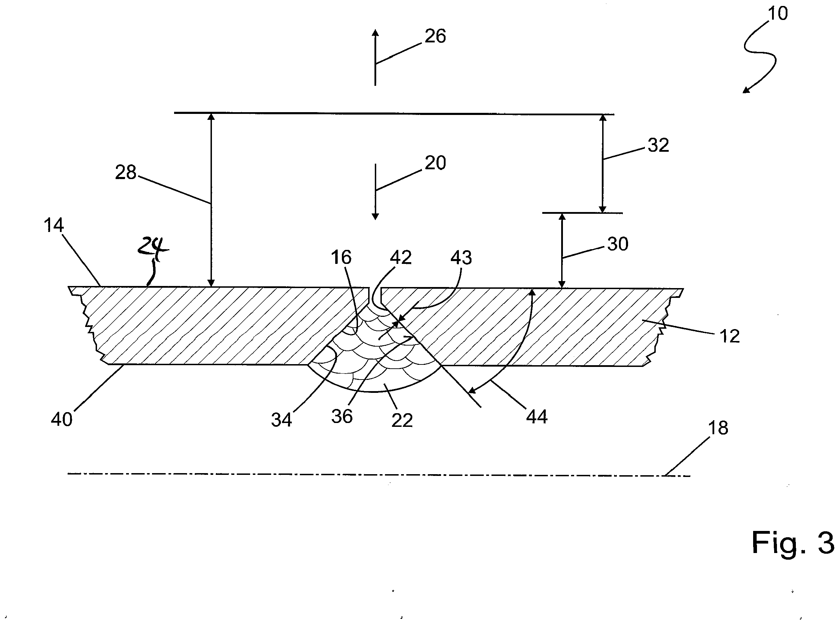

Figure 1 illustrates a process chart for the process 100 according to the invention for welding pipe connections according to the invention which is shown in Figure 3. In a first step S101, a first pipe section 12 and a second pipe section 14 of a pipe connection 10 according to the invention are axially aligned in order to be connected.

In a second step S102 an at least partially V-shaped welding groove 16 is formed between the first pipe section 12 and the second pipe section 14 which is open radially inwards that is in the direction of a middle axis 18 shown by arrow 20.

In a third step S103 an inside welding process is performed inside the first and second pipe sections 12, 14 to be connected. In an inside welding process pipes are welded from the inside diameter rather than from the outside diameter. In the process 100 illustrated in Figure 1, the first pipe section 12 is made of a ferritic material, preferably of P91 or P22 steel (with CTE1 12.6 resp. 13.9 E-6/K) for high temperature applications, wherein the second pipe section 14 is made of an austenitic material, preferably of austenitic steel or an Ni-Based material, for example IN 625 (with CTE2 14.8 E-6/K). A weld joint 22 is made of austenitic weld joint filler material which is preferably austenitic steel or Ni-based material, for example ERNICr-3 (with CTE3 15.3 E-6/K). That means the coefficient of thermal expansion of the weld joint filler material is close (resp. more similar) to the coefficient of thermal expansion of the material of the second pipe section (difference between CTE3 and CTE2 is only 0.5 E-6/K) with respect to the coefficient of thermal expansion of the material of the first pipe section (difference between CTE3 and CTE1 is 2.7 resp. 1.4 E-6/K for the described materials). In another example a first pipe section made of the ferritic base materials P91 (CTE1 12.6 E-6/K) or P22 (CTE1 13.9 E-6/K) is connected to an austenitic pipe section, e.g. SS347H (CTE2 18.9 E-6/K) using a similar filler metal like SS347H with a CTE3 similar to that one of SS347H.

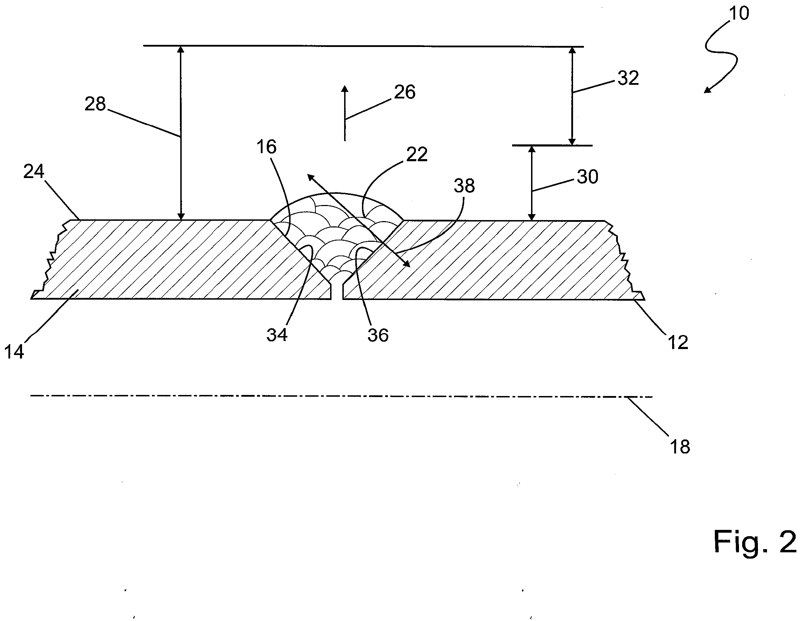

The advantages of the process 100 according to the invention which is illustrated in Figure 1 and the pipe connection 10 according to the invention which is illustrated in Figure 3 will now be described in further details with reference to Figures 2 and 3.

Figure 2 is showing a pipe connection 10 according to the state of the art. The same reference numerals will be used for corresponding elements as in the pipe connection 10 according to the invention illustrated in Figure 3.

The pipe connection 10 is having a first pipe section 12 made of ferritic material and a second pipe section 14 made of austenitic material which are axially aligned around a middle axis 18. A welding groove 16 which is V-shaped is formed on the outside surface 24 of the pipe connection 10 and opens radially outwards in the direction of arrow 26. The welding groove 16 is filled with weld joint filler material of austenitic material which is forming the weld joint 22.

When a pipe connection 10 according to the state of the art is subject to high temperatures such as high temperatures in a power plant, elongations due to different coefficients of thermal expansion (CTE) occur. The second pipe section 14 of austenitic material is having a higher CTE than the first pipe section 12 made of ferritic material. The elongation of the second pipe section 14 is marked by arrow 28, wherein the elongation of the first pipe section 12 is marked by arrow 30. The elongation 28 is bigger than the elongation 30, wherein the delta of the elongations 28, 30 is marked by arrow 32. Because of the choice of materials, the weld joint 22 is providing a good connection at the fusion line 34 between the second pipe section 14 and the weld joint 22 which are both made of austenitic material and having a CTE within the same range, that means they have similar CTE.

However, when the elongations 28, 30 occur because of high temperatures, the already weak connection between the first pipe section 12 and the weld joint 22 in the area of a fusion line 36 is further weakened. Normal stress indicated by arrow 38 is induced on the fusion line 36 between the first pipe section 12 and the weld joint 22. This leads to additional stress which is added to the stress caused by operating parameters such as the inside pressure in the pipe connection 10 or bending moments which act upon the pipe connection 10.

In contrast to the pipe connection 10 according to the state of the art, which is illustrated in Figure 2, the pipe connection 10 according to the invention, which is shown in Figure 3, overcomes these problems. The pipe connection 10 is substantially the same as the pipe connection 10 in Figure 2, because the pipe sections 12, 14 and the weld joint 22 are made of the same material combination as the pipe connection 10 in Figure 2. However, the welding groove 16, which is filled with weld joint filler material of austenitic material and forming the weld joint 22 is not opening radially outwards. The pipe connection 10 illustrated in Figure 3 is having a welding groove 16, which is V-shaped and formed on an inside surface 40 of the pipe connection 10 and opening radially inwards in the direction of the middle axis 18 depicted by arrow 20.

When the pipe connection 10 of Figure 3 is subject to high temperatures the connection between the weld joint 22 and the second pipe section 14 in the area of the fusion line 34 is good because both the second pipe section 14 and the weld joint 22 are made of an austenitic material. However, in the area of the fusion line 36 between the first pipe section 12 of ferritic material and the weld joint 22 a significant improvement can be achieved. When the second pipe section 14 is elongated as depicted by arrow 28 a delta in elongations 32 occurs because the elongation of the first pipe section 12 depicted by arrow 30 is smaller. However, because of the orientation of the welding groove 16 radially inwards, an inclined surface 42 is formed in the area of the fusion line 36. The inclined surface 42 is arranged in an angle 44 to the outside surface 24 of the pipe connection 10. When the weld joint 22 tries to expand in the direction of arrow 26, the movement is restricted by the inclined surface 42 which is exerting a counterforce on the weld joint 22. Thus, inside welding of a pipe connection 10 according to Figure 3 by performing the process 100 illustrated in Figure 1 and by providing a V-shaped welding groove 16 open radially inwards leads to reduced stress in the area of the weld joint 22. Compressive stress is induced on the fusion line 36 as depicted by arrow 43. Therefore, the operation time of pipe connections 10 according to the invention and shown in Figure 3 can be significantly enhanced whereas high costs for inspection of the pipe connection 10 via non-destructive testing (NDT) or other high costs in order to improve the stress levels at the weld joint 22 can be avoided.

### LIST OF REFERENCE NUMERALS

- 10: pipe connection
- 12: first pipe section
- 14: second pipe section
- 16: welding groove
- 18: middle axis
- 20: arrow
- 22: weld joint
- 24: outside surface
- 26: arrow
- 28: arrow
- 30: arrow
- 32: arrow
- 34: fusion line
- 36: fusion line
- 38: arrow
- 40: inside surface
- 42: inclined surface
- 43: arrow
- 44: angle
- 100: process
- S101: first step
- S102: second step
- S103: third step

## Claims

1. Process (100) for welding pipe connections (10) for high temperature applications, particularly in power plants, comprising a first pipe section (12) and a second pipe section (14), wherein the first pipe section (12) is made of a ferritic material having a first coefficient of thermal expansion (CTE1) and wherein the second pipe section (14) is made of an austenitic material having a second coefficient of thermal expansion (CTE2), which is different from the first coefficient of thermal expansion (CTE1);
the process (100) comprising the steps of:
- axially aligning the first and second pipe sections (12, 14) to be connected;
**characterized in that** the process further comprises the steps of:
- making an at least partially V-shaped welding groove (16) open radially inwards
- filling the welding groove (16) with a weld joint filler material of austenitic material and forming a weld joint (22) by performing an inside welding process inside the first and second pipe sections (12, 14) to be connected; wherein the austenitic filler material has a third coefficient of thermal expansion (CTE3) which is closer to the second coefficient of thermal expansion (CTE2) with respect to the first coefficient of thermal expansion (CTE1) of the material of the first pipe section (12); wherein the inside welding process is performed such that the weld joint (22) has a first fusion line along the first pipe section (12) and the weld joint (22) and a second fusion line along the second pipe section (14) and the weld joint (22).

2. Process (100) for welding according to claim 1, wherein a pipe section made of ferritic C-steel is used as the first pipe section (12).

3. Process (100) for welding according to claim 2, wherein P91 steel or P22 steel is used as ferritic C-steel.

4. Process (100) for welding according to any one of the preceding claims, wherein a pipe section made from austenitic steel or from Ni-based materials is used as the second pipe section (14).

5. Process (100) for welding according to any one of the preceding claims, wherein austenitic steel or a Ni-based material is used as the austenitic filler material.

6. Pipe connection (10) for high temperature applications, particularly in power plants; the pipe connection (10) comprising a first pipe section (12) and a second pipe section (14), wherein the first pipe section (12) is made of a ferritic material having a first coefficient of thermal expansion (CTE1) and wherein the second pipe section (14) is made of an austenitic material having a second coefficient of thermal expansion (CTE2), which is different from the first coefficient of thermal expansion (CTE1), **characterized in that** a weld joint (22) fills a welding groove (16) of the pipe connection (10) and is made of an austenitic filler material which has a third coefficient of thermal expansion (CTE3); the weld joint (22) providing a connection between the first pipe section (12) and the second pipe section (14) such that the weld joint (22) has a first fusion line (34) along the first pipe section (12) and the weld joint (22) and a second fusion line (36) along the second pipe section (14) and the weld joint (22); and wherein the third coefficient of thermal expansion (CTE3) is closer to the second coefficient of thermal expansion (CTE2) with respect to the first coefficient of thermal expansion (CTE1) of the material of the first pipe section (12); and wherein the welding groove (16) is at least partially V-shaped and open radially inwards and that the first and second pipe sections(12, 14) are welded together via inside welding.

7. Pipe connection (10) according to claim 6, wherein the first pipe section (12) is made of ferritic C-steel.

8. Pipe connection (10) according to claim 7, wherein the ferritic C-steel is P91 steel or P22 steel.

9. Pipe connection (10) according to any one of claims 6 to 8, wherein the second pipe section (14) is made of austenitic steel or a Ni-based material.

10. Pipe connection (10) according to any one of claims 6 to 9, wherein the austenitic filler material is made of austenitic steel or a Ni-based material.

## Patentansprüche

1. Verfahren (100) zum Schweißen von Rohrverbindungen (10) für Hochtemperaturanwendungen, insbesondere in Kraftwerken, mit einem ersten Rohrabschnitt (12) und einem zweiten Rohrabschnitt (14), wobei der erste Rohrabschnitt (12) aus einem ferritischen Material mit einem ersten Wärmeausdehnungskoeffizienten (CTE1) gefertigt ist und wobei der zweite Rohrabschnitt (14) aus einem austenitischen Material mit einem zweiten Wärmeausdehnungskoeffizienten (CTE2), der sich von dem ersten Wärmeausdehnungskoeffizienten (CTE1) unterscheidet, gefertigt ist;
wobei das Verfahren (100) die Schritte umfasst:
- axiales Ausrichten der ersten und zweiten zu verbindenden Rohrabschnitte (12, 14);
**dadurch gekennzeichnet, dass** das Verfahren ferner die Schritte umfasst:
- Herstellen einer wenigstens teilweise V-förmigen Schweißnut (16), die radial nach innen offen ist;
- Füllen der Schweißnut (16) mit einem Schweißnahtfüllmaterial aus austenitischem Material und Ausbilden einer Schweißnaht (22) durch Ausführen eines Innenschweißverfahrens im Inneren der ersten und zweiten zu verbindenden Rohrabschnitte (12, 14); wobei das austenitische Füllmaterial einen dritten Wärmeausdehnungskoeffizienten (CTE3) aufweist, der in Bezug auf den ersten Wärmeausdehnungskoeffizienten (CTE1) des Materials des ersten Rohrabschnitts (12) näher an dem zweiten Wärmeausdehnungskoeffizienten (CTE2) ist; wobei das Innenschweißverfahren so durchgeführt wird, dass die Schweißnaht (22) eine erste Schmelzlinie entlang des ersten Rohrabschnitts (12) und der Schweißnaht (22) und eine zweite Schmelzlinie entlang des zweiten Rohrabschnitts (14) und der Schweißnaht (22) aufweist.

2. Verfahren (100) zum Schweißen nach Anspruch 1, wobei ein aus ferritischem C-Stahl gefertigter Rohrabschnitt als erster Rohrabschnitt (12) verwendet wird.

3. Verfahren (100) zum Schweißen nach Anspruch 2, wobei P91-Stahl oder P22-Stahl als ferritischer C-Stahl verwendet wird.

4. Verfahren (100) zum Schweißen nach einem der vorangehenden Ansprüche, wobei ein Rohrabschnitt, der aus austenitischem Stahl oder aus Materialien auf Ni-Basis gefertigt ist, als zweiter Rohrabschnitt (14) verwendet wird.

5. Verfahren (100) zum Schweißen nach einem der vorangehenden Ansprüche, wobei austenitischer Stahl oder ein Material auf Ni-Basis als das austenitische Füllmaterial verwendet wird.

6. Rohrverbindung (10) für Hochtemperaturanwendungen, insbesondere in Kraftwerken; wobei die Rohrverbindung (10) einen ersten Rohrabschnitt (12) und einen zweiten Rohrabschnitt (14) umfasst, wobei der erste Rohrabschnitt (12) aus einem ferritischen Material mit einem ersten Wärmeausdehnungskoeffizienten (CTE1) gefertigt ist und wobei der zweite Rohrabschnitt (14) aus einem austenitischen Material mit einem zweiten Wärmeausdehnungskoeffizienten (CTE2), der sich von dem ersten Wärmeausdehnungskoeffizienten (CTE1) unterscheidet, gefertigt ist, **dadurch gekennzeichnet, dass** eine Schweißnaht (22) eine Schweißnut (16) der Rohrverbindung (10) ausfüllt und aus einem austenitischen Füllmaterial hergestellt ist, das einen dritten Wärmeausdehnungskoeffizienten (CTE3) aufweist; wobei die Schweißnaht (22) eine Verbindung zwischen dem ersten Rohrabschnitt (12) und dem zweiten Rohrabschnitt (14) herstellt, so dass die Schweißnaht (22) eine erste Schmelzlinie (34) entlang des ersten Rohrabschnitts (12) und der Schweißnaht (22) aufweist und eine zweite Schmelzlinie (36) entlang des zweiten Rohrabschnitts (14) und der Schweißnaht (22) aufweist; und wobei der dritte Wärmeausdehnungskoeffizient (CTE3) in Bezug auf den ersten Wärmeausdehnungskoeffizienten (CTE1) des Materials des ersten Rohrabschnitts (12) näher am zweiten Wärmeausdehnungskoeffizienten (CTE2) ist; und wobei die Schweißnut (16) wenigstens teilweise V-förmig und radial nach innen offen ist, und wobei der erste und der zweite Rohrabschnitt (12, 14) mittels Innenschweißen miteinander verschweißt sind.

7. Rohrverbindung (10) nach Anspruch 6, wobei der erste Rohrabschnitt (12) aus ferritischem C-Stahl gefertigt ist.

8. Rohrverbindung (10) nach Anspruch 7, wobei der ferritische C-Stahl P91-Stahl oder P22-Stahl ist.

9. Rohrverbindung (10) nach einem der Ansprüche 6 bis 8, wobei der zweite Rohrabschnitt (14) aus austenitischem Stahl oder einem Material auf Ni-Basis gefertigt ist.

10. Rohrverbindung (10) nach einem der Ansprüche 6 bis 9, wobei das austenitische Füllmaterial aus austenitischem Stahl oder einem Material auf Ni-Basis hergestellt ist.

## Revendications

1. Processus (100) de soudage de raccords de tuyaux (10) pour des applications à haute température, en particulier dans des centrales électriques, comprenant une première section de tuyau (12) et une seconde section de tuyau (14), dans lequel la première section de tuyau (12) est constituée d'un matériau ferritique ayant un premier coefficient de dilatation thermique (CTE1) et dans lequel la seconde section de tuyau (14) est constituée d'un matériau austénitique ayant un deuxième coefficient de dilatation thermique (CTE2), qui est différent du premier coefficient de dilatation thermique (CTE1) ;
le processus (100) comprenant l'étape suivante :
- l'alignement axial des première et deuxième sections de tuyau (12, 14) à raccorder ;
**caractérisé en ce que** le processus comprend en outre les étapes suivantes :
- la réalisation d'une rainure de soudage (16) au moins partiellement en forme de V, ouverte radialement vers l'intérieur
- le remplissage de la rainure de soudage (16) avec un matériau d'apport de joint de soudure en matériau austénitique et la formation d'un joint de soudure (22) en réalisant un processus de soudage intérieur à l'intérieur des première et seconde sections de tuyau (12, 14) à raccorder ; dans lequel le matériau austénitique d'apport a un troisième coefficient de dilatation thermique (CTE3) qui est plus proche du deuxième coefficient de dilatation thermique (CTE2) par rapport au premier coefficient de dilatation thermique (CTE1) du matériau de la première section de tuyau (12) ; dans lequel le processus de soudage intérieur est réalisé de sorte que le joint de soudure (22) présente une première ligne de fusion le long de la première section de tuyau (12) et du joint de soudure (22) et une seconde ligne de fusion le long de la seconde section de tuyau (14) et du joint de soudure (22).

2. Processus (100) de soudage selon la revendication 1, dans lequel une section de tuyau constituée d'un acier C ferritique est utilisée comme première section de tuyau (12).

3. Processus (100) de soudage selon la revendication 2, dans lequel de l'acier P91 ou de l'acier P22 est utilisé comme acier C ferritique.

4. Processus (100) de soudage selon l'une quelconque des revendications précédentes, dans lequel une section de tuyau constituée d'acier austénitique ou de matériaux à base de Ni est utilisée comme seconde section de tuyau (14).

5. Processus (100) de soudage selon l'une quelconque des revendications précédentes, dans lequel on utilise un acier austénitique ou un matériau à base de Ni comme matériau austénitique d'apport.

6. Raccord de tuyaux (10) destiné à des applications à haute température, en particulier dans des centrales électriques ; le raccord de tuyaux (10) comprenant une première section de tuyau (12) et une seconde section de tuyau (14), dans lequel la première section de tuyau (12) est constituée d'un matériau ferritique ayant un premier coefficient de dilatation thermique (CTE1) et dans lequel la seconde section de tuyau (14) est constituée d'un matériau austénitique ayant un deuxième coefficient de dilatation thermique (CTE2), qui est différent du premier coefficient de dilatation thermique (CTE1), **caractérisé en ce qu'**un joint de soudure (22) remplit une rainure de soudage (16) du raccord de tuyaux (10) et est constitué d'un matériau austénitique d'apport qui a un troisième coefficient de dilatation thermique (CTE3) ; le joint de soudure (22) permettant un raccordement entre la première section de tuyau (12) et la seconde section de tuyau (14) de sorte que le joint de soudure (22) a une première ligne de fusion (34) le long de la première section de tuyau (12) et du joint de soudure (22) et une seconde ligne de fusion (36) le long de la seconde section de tuyau (14) et du joint de soudure (22) ; et dans lequel le troisième coefficient de dilatation thermique (CTE3) est plus proche du deuxième coefficient de dilatation thermique (CTE2) par rapport au premier coefficient de dilatation thermique (CTE1) du matériau de la première section de tuyau (12) ; et dans lequel la rainure de soudage (16) est au moins partiellement en forme de V et ouverte radialement vers l'intérieur et les première et seconde sections de tuyau (12, 14) sont soudées ensemble par l'intermédiaire d'un soudage intérieur.

7. Raccord de tuyaux (10) selon la revendication 6, dans lequel la première section de tuyau (12) est constituée d'acier C ferritique.

8. Raccord de tuyaux (10) selon la revendication 7, dans lequel l'acier C ferritique est un acier P91 ou un acier P22.

9. Raccord de tuyaux (10) selon l'une quelconque des revendications 6 à 8, dans lequel la seconde section de tuyau (14) est constituée d'acier austénitique ou d'un matériau à base de Ni.

10. Raccord de tuyaux (10) selon l'une quelconque des revendications 6 à 9, dans lequel le matériau austénitique d'apport est constitué d'acier austénitique ou d'un matériau à base de Ni.
